# FASCICULE DE BREVET EUROPEEN

(11) **EP 3 012 980 B1**
(45) Date de publication et mention de la délivrance du brevet: **24.03.2021**
(21) Numéro de dépôt: 15184275.4
(22) Date de dépôt: 08.09.2015
(51) Int. Cl.: H04B 5/00

(54) **PROCÉDÉ DE GESTION DU FONCTIONNEMENT, EN PARTICULIER DE LA MODULATION DE CHARGE, D'UN OBJET CAPABLE DE COMMUNIQUER SANS CONTACT AVEC UN LECTEUR, DISPOSITIF ET OBJET CORRESPONDANTS**
VERFAHREN ZUR STEUERUNG DES BETRIEBS, INSBESONDERE DER BELASTUNGSMODULATION, EINES OBJEKTS, DAS IN DER LAGE IST, KONTAKTLOS MIT EINEM LESEGERÄT ZU KOMMUNIZIEREN, ENTSPRECHENDE VORRICHTUNG UND ENTSPRECHENDES OBJEKT
METHOD FOR MANAGING THE OPERATION, IN PARTICULAR THE LOAD MODULATION, OF AN OBJECT ABLE TO CONTACTLESS COMMUNICATE WITH A READER, AND CORRESPONDING DEVICE AND OBJECT

(30) Priorité: 24.10.2014 FR 1460249
(43) Date de publication de la demande: 27.04.2016
(73) Titulaire: STMicroelectronics International N.V., 1118 BH Schiphol (NL)
(72) Inventeur: TUDOSE, Andrei, 06740 Chateauneuf (FR)
(74) Mandataire: Casalonga

(56) Documents cités:
- WO-A1-2013/002488
- US-A1- 2007 290 846
- US-A1- 2009 308 937

## Description

Des modes de mise en œuvre et de réalisation de l'invention concernent la communication sans fil entre un lecteur et un objet, par exemple un transpondeur du type étiquette (« tag » en langue anglaise), une carte à puce sans contact ou encore un téléphone mobile émulé en mode carte sans que ces exemples ne soient limitatifs, et plus particulièrement la gestion de la modulation de charge effectuée au sein d'un tel objet, en particulier un objet NFC (« Near Field Communication »).

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des téléphones mobiles émulés en mode carte, et des lecteurs.

La technologie NFC est particulièrement adaptée pour connecter tout type de dispositif utilisateur et permet des communications rapides et faciles.

Un objet sans contact est un objet capable d'échanger des informations via une antenne avec un autre objet sans contact, par exemple un lecteur, selon un protocole de communication sans contact.

Un objet NFC, qui est un objet sans contact, est un objet compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Lors d'une transmission d'information entre un lecteur et un objet émulé en mode étiquette ou carte, le lecteur génère un champ magnétique par l'intermédiaire de son antenne qui est généralement dans les normes classiquement utilisées, une onde sinusoïdale à 13,56MHz. La force du champ magnétique est comprise entre 0,5 et 7,5 ampères/mètre RMS (« Root Mean Square » en anglais).

De l'autre côté, l'antenne de l'objet émulant l'étiquette module le champ généré par le lecteur.

Cette modulation est effectuée en modifiant la charge connectée aux bornes de l'antenne de l'objet.

En modifiant la charge aux bornes de l'antenne de l'objet, l'impédance de sortie de l'antenne du lecteur change en raison du couplage magnétique entre les deux antennes. Il en résulte un changement dans les amplitudes et/ou les phases des tensions et courants présents au niveau des antennes du lecteur et de l'objet. Et, de cette façon, les informations à transmettre depuis l'objet vers le lecteur sont transmises par modulation de charge au courant d'antenne du lecteur.

La variation de charge effectuée lors de la modulation de charge se traduit par une modulation d'amplitude et/ou de phase du signal (tension ou courant) au niveau de l'antenne du lecteur. Une copie du courant d'antenne est générée et injectée dans la chaîne de réception du lecteur où il est démodulé et traité de façon à extraire les informations transmises.

Le meilleur transfert de puissance entre le lecteur et l'étiquette est obtenu lorsque l'étiquette est équipée d'un circuit apparié avec le circuit résonant du lecteur, et résonant lui-même à la fréquence du signal transmis par le lecteur, par exemple 13,56 MHz.

Cela étant, lorsque l'étiquette est trop près du lecteur, la fréquence de résonance du circuit résonant du lecteur va se décaler vers une autre valeur de fréquence en raison du couplage magnétique entre les deux circuits résonants du lecteur et de l'étiquette. Il en résulte par conséquent une réduction de l'efficacité et donc de la puissance transmise par le lecteur qui peut dans certains cas conduire à une perte du lien entre le lecteur et l'étiquette.

De même, lorsque l'étiquette est très éloignée du lecteur et même si la fréquence de résonance du circuit résonant de l'étiquette est égale à la fréquence d'émissions (13,56 MHz par exemple) il va en résulter une modification de la fréquence de résonance du circuit résonant du lecteur, certes dans une moins grande mesure, en raison de la réduction du couplage magnétique entre le lecteur et l'étiquette. Le document US2009/0308937 A1 décrit un dispositif de communication sans contact dont le circuit intégré comporte un circuit redresseur, un registre contenant plusieurs points de réglage relatifs à la tension de sortie du circuit redresseur, un circuit de détection du niveau de tension du circuit redresseur et plusieurs transistors utilisables pour une modulation de charge qui peuvent être sélectionnes ou non en fonction de la tension de sortie détectée du circuit redresseur compte tenu des différents points de réglage. Selon un mode de mise en œuvre et de réalisation, il est proposé de limiter autant que possible, voire de supprimer, la réduction de puissance transmise par le lecteur résultant de certaines positions relatives entre le lecteur et l'étiquette.

L'invention est définie par les revendications indépendantes. Des modes de réalisation sont décrits dans les revendications dépendantes.

Selon un aspect, il est proposé un procédé de gestion du fonctionnement d'un objet capable de communiquer sans contact avec un lecteur magnétiquement couplé au dit objet, comprenant au moins une phase de transmission d'informations depuis ledit objet vers le lecteur comportant une modulation de l'impédance d'une charge connectée aux bornes de l'antenne dudit objet.

Selon une caractéristique générale de cet aspect, le procédé comprend en outre une phase de contrôle comportant une estimation de la distance entre ledit objet et le lecteur et un ajustement de l'impédance de ladite charge en fonction de la distance estimée.

Ainsi, l'ajustement de l'impédance de la charge en fonction de la distance estimée entre le lecteur et l'étiquette permet de s'affranchir des variations éventuelles de puissance transmise par le lecteur évoqué ci-avant et résultant du couplage magnétique entre les antennes respectives du lecteur et de l'étiquette.

La phase de contrôle peut être effectuée préalablement à la phase de transmission ou créée éventuellement au cours de cette phase de transmission pour prendre en compte un éventuel déplacement de l'objet pendant la phase de transmission.

Et lorsqu'il est prévu plusieurs phases de transmission d'informations entre l'objet et le lecteur, il est préférable de procéder à une phase de contrôle préalablement à chaque phase de transmission, de façon à pouvoir ainsi prendre en compte une variation éventuelle de distance entre l'objet et le lecteur entre deux phases de transmission.

L'ajustement de l'impédance de la charge comprend avantageusement une variation de l'impédance de charge dans le même sens que celui de la variation de la distance. En d'autres termes, plus la distance entre le lecteur et l'objet diminue, plus l'impédance va diminuer. A contrario, plus la distance va augmenter, plus l'impédance va augmenter.

Plusieurs solutions sont possibles pour estimer la distance entre l'objet et le lecteur.

Ainsi, selon une première possibilité, l'estimation de la distance comprend une estimation de l'énergie reçue par ledit objet et résultant du champ magnétique irradié par le lecteur et une comparaison du niveau de cette énergie, avec au moins un seuil.

Dans ce cas, si ledit objet comprend un circuit de traitement connecté à l'antenne via un élément redresseur, l'estimation de l'énergie comprend la détermination d'une tension aux bornes d'un condensateur agissant comme réservoir d'énergie et connecté entre l'élément redresseur et le circuit de traitement.

En général, ledit objet comprend également un circuit commandable de limitation de tension (plus connu par l'homme du métier sous la dénomination anglo-saxonne de « clipping device » ou « clipper ») connecté aux bornes de l'antenne et destiné à absorber les surtensions éventuelles.

Dans ce cas, selon un mode de réalisation, l'estimation de ladite distance comprend une détermination du niveau d'activité du circuit de limitation de tension et une comparaison de ce niveau d'activité avec au moins un seuil.

La communication peut être par exemple une communication champ proche du type NFC (« Near Field Communication »).

Selon un autre aspect, il est proposé un dispositif de gestion du fonctionnement d'un objet capable de communiquer sans contact avec un lecteur magnétiquement couplé audit objet, comprenant des premiers moyens configurés pour effectuer une modulation de l'impédance d'une charge connectée aux bornes de l'antenne lors d'une phase de transmission d'informations depuis ledit objet vers le lecteur.

Selon une caractéristique générale de cet autre aspect, le dispositif comprend en outre des moyens de contrôle comportant un module d'estimation configuré pour effectuer une estimation de la distance entre ledit objet et le lecteur et un module d'ajustement configuré pour effectuer un ajustement de l'impédance de ladite charge en fonction de la distance estimée.

Les premiers moyens (étape de rétro-modulation) et le module d'ajustement comportent avantageusement des éléments communs.

Selon un mode de mise en œuvre, le module d'ajustement est configuré pour faire varier l'impédance de charge dans le même sens que celui de la variation de la distance.

Selon un mode de réalisation, le module d'ajustement comprend un réseau résistif et/ou capacitif, connecté aux bornes de l'antenne, sélectivement commandable par une information de commande représentative de ladite distance estimée.

Selon un exemple, le module d'estimation est configuré pour effectuer une estimation de l'énergie reçue par ledit objet et résultant du champ magnétique irradié par le lecteur et une comparaison du niveau de cette énergie avec au moins un seuil. Dans ce cas, si ledit objet comprend un circuit de traitement connecté à l'antenne via un élément redresseur, le module d'estimation comprend un condensateur agissant comme réservoir d'énergie et connecté entre l'élément redresseur et ledit circuit de traitement, des moyens configurés pour comparer ladite tension au dit au moins un seuil.

Selon un mode de réalisation ledit module d'estimation comprend un circuit commandable de limitation de tension, connecté aux bornes de l'antenne, des moyens configurés pour déterminer le niveau d'activité du circuit de limitation de tension et un étage de comparaison configuré pour comparer ce niveau d'activité à au moins un seuil.

Le dispositif tel que défini ci-avant peut être avantageusement réalisé de façon intégrée.

Selon un autre aspect, il est proposé un objet, par exemple une carte à puce, une étiquette, un téléphone mobile cellulaire pouvant être émulé en mode carte, incorporant un dispositif tel que défini ci-avant.

D'autres avantages et caractéristiques de l'invention apparaîtront à l'examen de la description détaillée de modes de mise en œuvre et de réalisation, nullement limitatifs, et des dessins annexés sur lesquels :

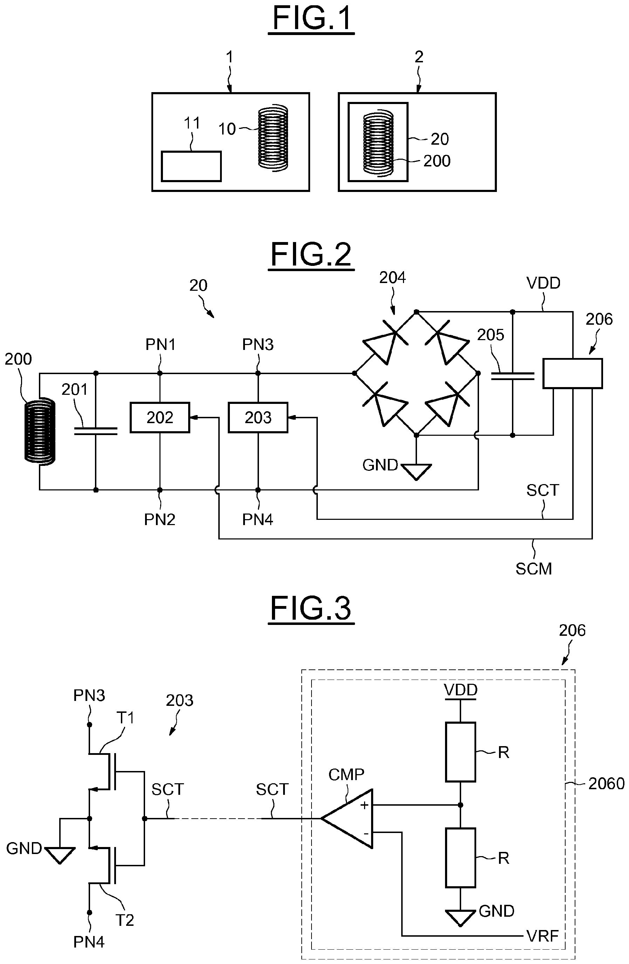

- Les figures 1 à 10 illustrent schématiquement des modes de mise en œuvre et de réalisation de l'invention.

Sur la figure 1, la référence 1 désigne un lecteur, par exemple mais non limitativement un téléphone mobile cellulaire émulé en mode lecteur ou bien un lecteur classique de carte à puce sans contact ou d'étiquette (Tag) tel qu'un badge, comportant une antenne 10 ainsi qu'un démodulateur vectoriel 11 configuré pour effectuer une démodulation d'amplitude et/ou de phase d'un signal susceptible d'être modulé en amplitude et/ou en phase et reçu au niveau de l'antenne 10, par exemple la tension aux bornes de cette antenne. Le lecteur 1 est destiné à irradier un champ magnétique.

La référence 2 désigne un objet, par exemple un téléphone mobile cellulaire émulé en mode carte, et plus généralement un transpondeur électromagnétique (Tag) telle qu'une étiquette ou un badge.

Cet objet 2 comporte ici un circuit intégré 20 connecté ici à une antenne 200 externe au circuit intégré et magnétiquement couplée à l'antenne 10 du lecteur 1.

Sur la figure 2, on voit que le circuit intégré comporte ici un condensateur 201 formant avec la bobine 200 un circuit résonant parallèle permettant avec un étage de rétro-modulation 202 de moduler le champ magnétique généré par un circuit oscillant du lecteur. Ce circuit résonant 200-201 est connecté aux deux entrées alternatives d'un pont redresseur à diode 204. En variante, il serait possible d'utiliser comme élément de redressement un élément de redressement mono-alternance.

Quand l'objet entre dans le champ magnétique du lecteur, une tension haute-fréquence est générée aux bornes du circuit résonant 200-201. Cette tension redressée par le pont redresseur 204 fournit une tension d'alimentation VDD à un circuit électronique 206 de l'objet pouvant par exemple contenir au moins une mémoire et un processeur.

Par ailleurs, un condensateur 205 servant de réservoir d'énergie (« buffer capacitor ») est également connecté entre la tension d'alimentation VDD et la masse GND en parallèle sur le circuit électronique 206.

Généralement, le circuit intégré comporte également un circuit de limitation de tension 203 dont les deux bornes PN3 et PN4 sont reliées aux deux bornes du circuit résonant 200-201. Ce circuit de limitation de tension (également connu par l'homme du métier sous la dénomination anglo-saxonne de « clipping circuit ») est commandable par un signal de commande SCT émanant, dans ce mode de réalisation, du circuit électronique 206.

Pour permettre la transmission de données depuis l'objet vers le lecteur 1, le circuit électronique 206 commande, par l'intermédiaire d'un signal de commande SCM, l'étage 202 de rétro-modulation du circuit résonant 200-201. Cet étage 202 comporte, comme on le verra plus en détail ci-après, un ensemble de commutateurs électroniques commandés par le signal SCM et un circuit résistif et/ou capacitif, sélectivement commandable par l'intermédiaire des commutateurs, de façon à modifier la charge connectée aux bornes de l'antenne 200 et permettre ainsi d'une part la détection côté lecteur, et d'autre part l'ajustement de l'impédance de cette charge en fonction de la distance entre le lecteur et l'objet.

On se réfère maintenant plus particulièrement à la figure 3 pour décrire un mode de réalisation d'un dispositif de limitation de tension, cet exemple étant aucunement limitatif.

Comme indiqué ci-avant, lorsque le lecteur génère un champ électromagnétique, par exemple à 13,56MHz, ce champ va induire une tension aux bornes de l'inductance 200 de l'antenne de l'objet. La valeur de cette tension induite dépend du coefficient de couplage entre les antennes du lecteur et de l'objet, de l'intensité du courant utilisé par le lecteur pour générer le champ électromagnétique et de la valeur de l'inductance L.

Lorsque l'objet est placé très près du lecteur, la tension induite peut devenir si importante qu'elle peut détruire notamment le circuit électronique 206 si aucune précaution n'est prise.

C'est pourquoi on équipe généralement le circuit intégré du circuit de limitation de tension 203 (« clipping circuit »). Fonctionnellement, dès que la tension induite aux bornes de l'antenne de l'objet atteint une valeur prédéfinie, le circuit de limitation de tension va commuter dans un mode où il va modifier l'impédance de l'antenne de façon à limiter la tension induite. En pratique, l'impédance du circuit de limitation de tension va chuter.

Sur la figure 3, on voit que le circuit de limitation de tension 203 comporte un premier transistor NMOS T1 connecté entre la borne PN3 et la masse GND et un deuxième transistor NMOS T2 connecté entre la borne PN4 et la masse GND. Les grilles de ces deux transistors sont commandées par le signal de commande SCT délivré par un module de commande 2060 par exemple incorporé dans le circuit électronique 206.

Ce module de commande 2060 comporte ici un pont diviseur formé de deux résistances R connectées en série entre la tension VDD et la masse GND et dont le point milieu est connecté à l'entrée positive d'un comparateur CMP, l'entrée négative de ce comparateur CMP recevant une tension de référence prédéfinie VRF, par exemple 1,2Volts.

Si, la tension VDD a valeur inférieure à deux fois la valeur de la tension de référence VRF, le signal SCT aura toujours le niveau logique « 0 », les transistors NMOS T1 et T2 étant alors bloqués.

Par contre, si la tension VDD excède deux fois la valeur de la tension de référence, les transistors T1 et T2 seront passants ce qui aura pour effet de faire chuter l'impédance vue de l'antenne et par conséquent de réduire la tension induite.

Bien que l'on ait décrit ici un dispositif du type « bloqué-passant », à des fins de simplification, la boucle de commande peut être en réalité plus du type « analogique » en ce sens que si la tension VDD a une valeur légèrement supérieure à deux fois la valeur VRF, l'impédance présentée par les transistors T1 et T2 en parallèle sur l'inductance 200 aura une valeur relativement élevée alors que si la tension VDD est significativement plus élevée que deux fois VRF, l'impédance des transistors T1 et T2 sera bien plus faible.

En conclusion, la tension VDD aux bornes du condensateur 205 formant réservoir d'énergie, aura une valeur inférieure ou égale à deux fois la valeur de la tension VRF.

Et, lorsque l'objet est très proche du lecteur, la tension VDD sera limitée à 2VRF. Lorsque la distance entre le lecteur et l'objet augmente, cette tension VDD va rester à la valeur 2VRF jusqu'à ce que sa valeur soit suffisamment basse pour que les transistors du circuit de limitation de tension soient constamment bloqués. Et à partir de là, lorsque la distance augmente encore, la tension VDD va commencer à chuter.

La valeur de la tension VDD peut donc servir ici d'indicateur de la distance entre le lecteur et l'objet.

Le dispositif de gestion du fonctionnement de l'objet comprend des moyens de contrôle, incorporés au moins en partie au sein du circuit électronique 206, configurés pour effectuer une phase de contrôle comportant une estimation de la distance entre l'objet et le lecteur et un ajustement de l'impédance de la charge connectée aux bornes de l'antenne, en fonction de la distance estimée.

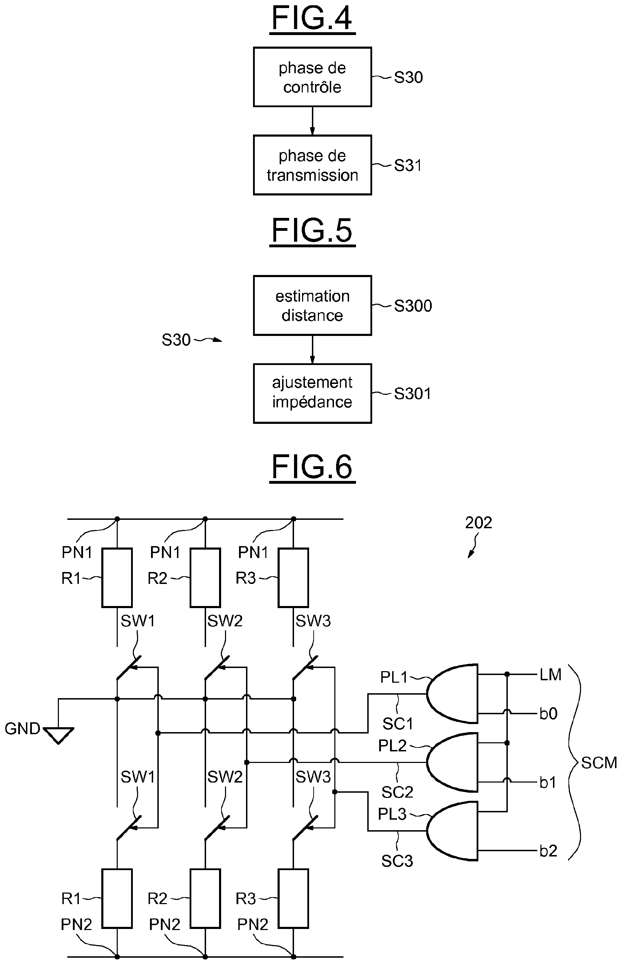

Sur la figure 4, la phase de contrôle S30 est effectuée préalablement à la phase de transmission S31. Cela étant, la phase de contrôle pourrait aussi être effectuée au cours de la phase de transmission.

S'il existe plusieurs phases de transmission successives, une phase de contrôle S30 sera par exemple effectuée avant chaque phase de transmission S31 de façon à prendre en compte un déplacement éventuel de l'objet par rapport au lecteur entre chaque phase de transmission de données.

Comme illustré schématiquement sur la figure 5, la phase de contrôle S30 comporte une estimation S300 de distance entre le lecteur et l'objet et un ajustement S301 de l'impédance de la charge connectée sur l'antenne en fonction de la distance estimée.

On se réfère maintenant plus particulièrement à la figure 6 pour décrire un mode de réalisation de l'étage de rétro-modulation 202

Dans cet exemple, l'étage de rétro-modulation est purement résistif. Cela étant, dans d'autres cas il pourrait être à la fois résistif et capacitif ou bien purement capacitif.

Dans cet exemple de réalisation, l'étage de rétro-modulation 202 comporte un réseau résistif R1, R2, R3 connecté et sélectivement commandable par une information de commande SCM dont on verra qu'elle est représentative de la distance estimée. Ce réseau résistif sélectivement commandable fait ainsi partie d'un module d'ajustement configuré pour effectuer un ajustement de l'impédance de la charge connectée aux bornes de l'antenne 200 de l'objet, en fonction de la distance estimée entre l'objet et le lecteur.

Plus précisément, le réseau résistif comporte une première paire de résistances R1 connectées en série entre les bornes PN1 et PN2 par l'intermédiaire d'une paire de commutateurs SW1, par exemple des transistors. Le point milieu de cette structure est connecté à la masse.

Le réseau résistif comporte également une deuxième paire de résistances R2 également connectées en série entre les bornes PN1 et PN2 par l'intermédiaire d'une paire de deuxième commutateur SW2. Là encore, le point milieu de cette structure est connecté à la masse.

Enfin, le module d'ajustement comporte une troisième paire de résistance R3 connectée en série entre les bornes PN1 et PN2 par l'intermédiaire d'une troisième paire de commutateurs SW3. Là encore, le point milieu de cette structure est connecté à la masse.

Le module d'ajustement comporte par ailleurs ici un ensemble de trois portes logiques PL1, PL2, PL3, ici des portes logiques ET dont les sorties respectives fournissent trois signaux de commande SC1, SC2, SC3 commandant respectivement les commutateurs SW1, SW2 et SW3.

Les trois portes logiques PL1-PL3 sont commandées par le signal de commande SCM qui comporte un signal logique élémentaire LM délivré par le circuit électronique et destiné à rétro-moduler l'impédance de la charge en fonction des données à transmettre. Ce signal élémentaire LM est délivré sur chacune des premières entrées des portes logiques PL1-PL3.

Le signal de commande SCM comporte par ailleurs trois autres signaux élémentaires b0, b1 et b2 délivrés respectivement sur les deuxièmes entrées des trois portes logiques PL1-PL3.

Chacun des signaux élémentaires LM, b0, b1 et b2 est susceptible de prendre un niveau logique « 0 » ou un niveau logique « 1 ».

En fonction de la valeur logique des signaux élémentaires b0, b1 et b2, l'une des paires de résistance sera sélectionnée.

Dans cet exemple de réalisation, la valeur des résistances R1 est plus faible que celle des résistances R2 elle-même plus faible que celle des résistances R3. A titre indicatif, on peut prendre par exemple une valeur de 80 Ohms pour les résistances R1, une valeur de 110 Ohms pour les résistances R2 et une valeur de 140 Ohms pour les résistances R3.

Et, comme on peut le voir maintenant plus en détail, pour une courte distance entre le lecteur et l'objet, c'est la paire de résistances R1 qui va être sélectionnée pour effectuer la rétro-modulation tandis que pour une distance plus grande ce sera la paire de résistances R2 qui va être sélectionnée pour effectuer la rétro-modulation et pour une distance encore plus grande c'est cette fois-ci la paire de résistances R3 qui va être sélectionnée pour effectuer la rétro-modulation.

Ainsi, pour une distance ou une plage de distance donnée, deux des commutateurs, par exemple les commutateurs SW2 et SW3 seront constamment ouverts tandis que les autres commutateurs SW1 seront ouverts et fermés en fonction de la valeur logique du signal élémentaire LM.

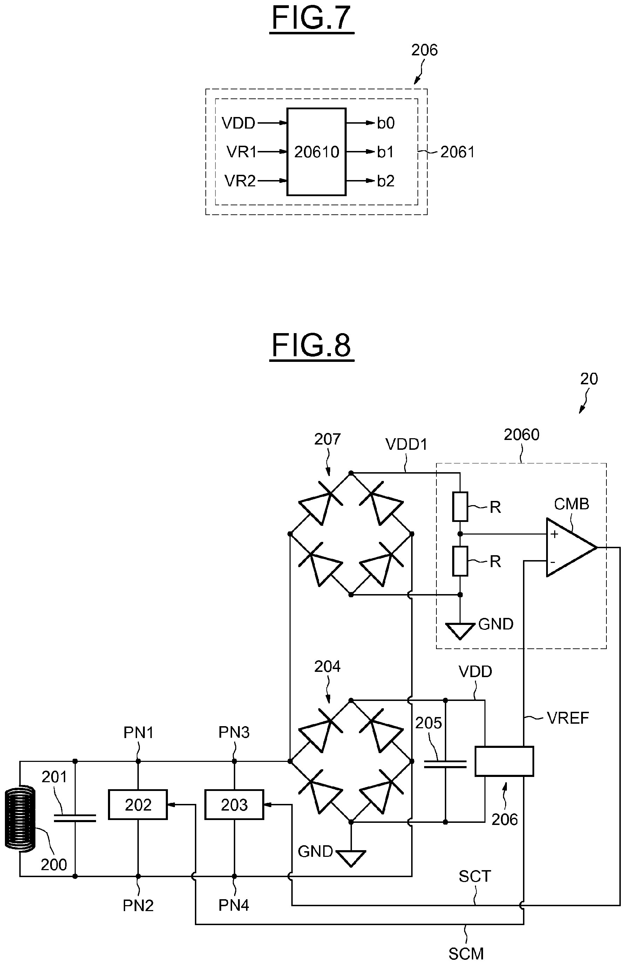

On se réfère maintenant plus particulièrement à la figure 7 pour décrire un premier mode de réalisation d'un module d'estimation 2061 configuré pour estimer la distance entre l'objet et le lecteur.

Dans ce mode de réalisation, le module d'estimation 2061 est configuré pour effectuer une estimation de l'énergie reçue par l'objet et résultant du champ magnétique irradié par le lecteur et pour comparer cette énergie avec au moins un seuil, en l'espèce deux seuils.

Et, à cet égard, le module d'estimation 2061 va utiliser la tension VDD présente aux bornes du condensateur 205 formant un réservoir d'énergie.

Deux seuils de tension VR1 et VR2, par exemple égaux à 2,5Volts et 3,5Volts, sont utilisés ici.

Un étage de comparaison 20610 compare alors la tension VDD à ces deux seuils VR1 et VR2 pour délivrer les signaux élémentaires de commande b0, b1 et b2.

Plus particulièrement, si la tension VDD est inférieure ou égale à VR1, alors le signal élémentaire b0 et le signal élémentaire b1 prennent la valeur logique « 0 » tandis que le signal élémentaire b2 prend la valeur logique « 1 ».

Si la tension VDD est supérieure à VR1 et inférieure ou égale à VR2, alors c'est cette fois-ci le signal logique b1 qui prend la valeur 1 tandis que les signaux logiques b0 et b2 ont la valeur logique 0.

Et, si la tension VDD est supérieure à VR2, alors c'est cette fois-ci le signal de commande élémentaire B0 qui prend la valeur logique « 1 « tandis que les signaux de commande élémentaires b1 et b2 prennent la valeur logique « 0 ».

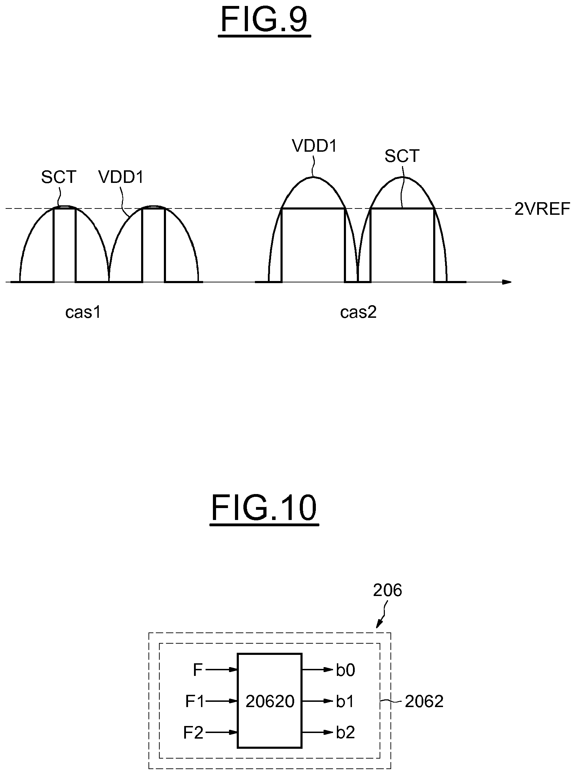

On se réfère maintenant plus particulièrement aux figures 8 et 9 pour décrire une variante d'estimation de la distance entre le lecteur et l'objet.

Dans cette variante, la distance va être estimée à partir du niveau d'activité du circuit de limitation de tension, et plus particulièrement le facteur d'utilisation (« duty cycle »).

Et, là encore, on va comparer ce niveau d'activité, plus précisément le facteur d'utilisation, à au moins un seuil pour déterminer les valeurs des signaux élémentaires b0, b1 et b2 du signal de commande SCM.

Plus précisément, dans ce cas, comme illustré sur la figure 8, le circuit intégré 20 comporte outre les éléments qui ont été décrits en référence à la figure 2, un pont redresseur supplémentaire 207 connecté également aux bornes de l'antenne externe 200 et fournissant une tension redressée mais non filtrée VDD1 au module de commande 2060 analogue à celui qui a été décrit en référence à la figure 3 et qui délivre le signal de commande SCT du circuit de limitation de tension 203.

Cette fois-ci, comme on le voit sur la figure 8, le module de commande 2060 est situé à l'extérieur du circuit électronique 206, ce dernier fournissant toutefois la valeur VRF au comparateur CMP.

On définit alors le facteur d'utilisation du circuit de limitation 203, représentatif du niveau d'activité de ce circuit de limitation de tension comme étant le rapport entre la durée pendant laquelle les transistors T1 et T2 sont passants et la durée pendant laquelle les transistors T1 et T2 sont bloqués.

Sur la figure 9, on a illustré deux cas de figure.

Dans le cas 1 (partie gauche de la figure 9) l'objet est supposé être à une distance de l'objet plus grande que dans le cas 2 (partie droite de la figure 9).

On voit dans chacun de ces cas que lorsque la tension VDD1 dépasse deux fois la tension VRF, le signal de commande SCT prend l'état logique « 1 » pour rendre passants les transistors T1 et T2 et prend l'état logique « 0 » dans le cas contraire.

Et, plus la distance entre l'objet et le lecteur est proche, plus le facteur d'utilisation F sera élevé.

On peut ainsi définir deux seuils F1 et F2 pour les valeurs de ces facteurs d'utilisation et la comparaison du facteur d'utilisation à ces deux seuils VF1, VF2 permettra de déterminer les valeurs logiques des signaux élémentaires b0, b1 et b2.

Matériellement, comme illustré sur la figure 10, cette comparaison est effectuée dans un étage de comparaison 20620 du module d'estimation 2062.

## Revendications

1. Procédé de gestion du fonctionnement d'un objet capable de communiquer sans contact avec un lecteur magnétiquement couplé audit objet, comprenant au moins une phase de transmission (S31) d'informations depuis ledit objet (2) vers le lecteur (1) comportant une modulation de l'impédance d'une charge connectée aux bornes de l'antenne dudit objet, au moins une phase de contrôle (S30) comportant une estimation (S300) de la distance entre ledit objet et le lecteur et un ajustement (S301) de l'impédance de ladite charge en fonction de la distance estimée, **caractérisé en ce que** ledit objet (2) comprend un circuit commandable de limitation de tension (203), connecté aux bornes de l'antenne, et l'estimation de ladite distance comprend une détermination du niveau d'activité (F) du circuit de limitation de tension et une comparaison de ce niveau d'activité (f) à au moins un seuil (F1, F2).

2. Procédé selon la revendication 1, dans lequel l'ajustement de l'impédance de la charge comprend une variation de l'impédance de charge dans le même sens que celui de la variation de la distance.

3. Procédé selon l'une des revendications précédentes, dans lequel la communication est une communication champ proche du type NFC (« Near Field Communication »).

4. Dispositif de gestion du fonctionnement d'un objet capable de communiquer sans contact avec un lecteur magnétiquement couplé audit objet, comprenant des premiers moyens (202) configurés pour effectuer une modulation de l'impédance d'une charge connectée aux bornes de l'antenne lors d'une phase de transmission d'informations depuis ledit objet vers le lecteur, des moyens de contrôle comportant un module d'estimation (2061) configuré pour effectuer une estimation de la distance entre ledit objet et le lecteur et un module d'ajustement (R1-R3, PL1-PL3) configuré pour effectuer un ajustement de l'impédance de ladite charge en fonction de la distance estimée, **caractérisé en ce que** ledit module d'estimation comprend un circuit commandable de limitation de tension (203), connecté aux bornes de l'antenne, et des moyens (2062) configurés pour déterminer le niveau d'activité (F) du circuit de limitation de tension et un étage de comparaison (20620) configuré pour comparer ce niveau d'activité (F) à au moins un seuil (F1, F2).

5. Dispositif selon la revendication 4, dans lequel le module d'ajustement comprend des éléments (R1-R3) communs auxdits premiers moyens (202).

6. Dispositif selon la revendication 4 ou 5, dans lequel le module d'ajustement est configuré pour faire varier l'impédance de charge dans le même sens que celui de la variation de la distance.

7. Dispositif selon la revendication 6, dans lequel le module d'ajustement comprend un réseau résistif et/ou capacitif (R1-R3), connecté aux bornes de l'antenne, sélectivement commandable par une information de commande (SCM) représentative de ladite distance estimée.

8. Dispositif selon l'une des revendications 4 à 7, réalisé de façon intégrée.

9. Objet comprenant un dispositif selon l'une des revendications 4 à 8.

10. Objet selon la revendication 9, formant un objet NFC.

## Patentansprüche

1. Verfahren zur Steuerung des Betriebs eines Objekts, das in der Lage ist, kontaktlos mit einem Lesegerät zu kommunizieren, das magnetisch mit dem Objekt gekoppelt ist, mindestens eine Übertragungsphase (S31) von Informationen von dem Objekt (2) zum Lesegerät (1) umfassend, die eine Modulation der Impedanz einer Last beinhaltet, die an die Klemmen der Antenne des Objekts angeschlossen ist, mindestens eine Kontrollphase (S30), die eine Schätzung (S300) des Abstandes zwischen dem Objekt und dem Lesegerät, und eine Anpassung der (S301) der Impedanz der Last in Abhängigkeit von dem geschätzten Abstand beinhaltet, **dadurch gekennzeichnet, dass** das Objekt (2) eine steuerbare Spannungsbegrenzungsschaltung (203) umfasst, die an die Klemmen der Antenne angeschlossen ist, und die Schätzung des Abstandes eine Bestimmung der Aktivitätsstufe (F) der Spannungsbegrenzungsschaltung und einen Vergleich dieser Aktivitätsstufe (f) mit mindestens einer Schwelle (Fl, F2) umfasst.

2. Verfahren nach Anspruch 1, wobei die Anpassung der Impedanz der Last eine Variation der Lastimpedanz in derselben Richtung wie jene der Variation des Abstandes umfasst.

3. Verfahren nach einem der vorstehenden Ansprüche, wobei die Kommunikation eine Nahfeldkommunikation in der Art NFC ("Near Field Communication") ist.

4. Vorrichtung zur Steuerung des Betriebs eines Objekts, das in der Lage ist, kontaktlos mit einem Lesegerät zu kommunizieren, das magnetisch mit dem Objekt gekoppelt ist, erste Mittel (202) umfassend, die konfiguriert sind, um eine Modulation der Impedanz einer Last, die an die Klemmen der Antenne des Objekts angeschlossen ist, in einer Übertragungsphase von Informationen von dem Objekt zum Lesegerät durchzuführen, Kontrollmittel, die ein Schätzungsmodul (2061) beinhalten, das konfiguriert ist, um eine Schätzung des Abstandes zwischen dem Objekt und dem Lesegerät durchzuführen, und ein Anpassungsmodul (R1-R3, PL1-PL3), das konfiguriert ist, um eine Anpassung der Impedanz der Last in Abhängigkeit von dem geschätzten Abstand durchzuführen, **dadurch gekennzeichnet, dass** das Schätzungsmodul eine steuerbare Spannungsbegrenzungsschaltung (203) umfasst, die an die Klemmen der Antenne angeschlossen ist, und Mittel (2062), die konfiguriert sind, um die Aktivitätsstufe (F) der Spannungsbegrenzungsschaltung zu bestimmen, und eine Vergleichsebene (20620), die konfiguriert ist, um diese Aktivitätsstufe (F) mit mindestens einer Schwelle (Fl, F2) zu vergleichen.

5. Vorrichtung nach Anspruch 4, wobei das Anpassungsmodul den ersten Mitteln (202) gemeinsame Elemente (R1-R3) umfasst.

6. Vorrichtung nach Anspruch 4 oder 5, wobei das Anpassungsmodul konfiguriert ist, um die Lastimpedanz in derselben Richtung wie jene der Variation des Abstandes variieren zu lassen.

7. Vorrichtung nach Anspruch 6, wobei das Anpassungsmodul eine Widerstands- und/oder kapazitives Netzwerk (R1-R3) umfasst, das an die Klemmen der Antenne angeschlossen ist, das selektiv durch eine Steuerungsinformation (SCM) steuerbar ist, die repräsentativ für den geschätzten Abstand ist.

8. Vorrichtung nach einem der Ansprüche 4 bis 7, die in integrierter Form realisiert ist.

9. Objekt, eine Vorrichtung nach einem der Ansprüche 4 bis 8 umfassend.

10. Objekt nach Anspruch 9, das ein NFC-Objekt bildet.

## Claims

1. Method for managing the operation of an object capable of contactlessly communicating with a reader magnetically coupled to said object, comprising at least one phase of transmission (S31) of information from said object (2) to the reader (1) including a modulation of the impedance of a load connected to the terminals of the antenna of said object, at least one control phase (S30) including an estimation (S300) of the distance between said object and the reader and an adjustment (S301) of the impedance of said load according to the estimated distance, **characterised in that** said object (2) comprises a controllable circuit for limiting voltage (203), connected to the terminals of the antenna, and the estimation of said distance comprises a determination of the level of activity (F) of the circuit for limiting voltage and a comparison of this level of activity (F) to at least one threshold (F1, F2).

2. Method according to claim 1, wherein the adjustment of the impedance of the load comprises a variation of the load impedance in the same direction as that of the variation of the distance.

3. Method according to one of the previous claims, wherein the communication is a near-field communication of the NFC type.

4. Device for managing the operation of an object capable of contactlessly communicating with a reader magnetically coupled to said object, comprising first means (202) configured to carry out a modulation of the impedance of a load connected to the terminals of the antenna during a phase of transmission of information from said object to the reader, control means including an estimation module (2061) configured to carry out an estimation of the distance between said object and the reader and an adjustment module (R1-R3, PL1-PL3) configured to carry out an adjustment of the impedance of said load according to the estimated distance, **characterised in that** said estimation module comprises a controllable circuit for limiting voltage (203), connected to the terminals of the antenna, and means (2062) configured to determine the level of activity (F) of the circuit for limiting voltage and a comparison stage (20620) configured to compare this level of activity (F) to at least one threshold (Fl, F2).

5. Device according to claim 4, wherein the adjustment module comprises elements (R1-R3) shared by said first means (202).

6. Device according to claim 4 or 5, wherein the adjustment module is configured to vary the load impedance in the same direction as that of the variation of the distance.

7. Device according to claim 6, wherein the adjustment module comprises a resistive and/or capacitive network (R1-R3), connected to the terminals of the antenna, selectively controllable by a piece of control information (SCM) representative of said estimated distance.

8. Device according to one of claims 4 to 7, created in an integrated manner.

9. Object comprising a device according to one of claims 4 to 8.

10. Object according to claim 9, forming an NFC object.
